## Europäisches Patentamt
## European Patent Office
## Office européen des brevets

(19)

(11) Veröffentlichungsnummer: **0 005 798**
**B1**

(12) **EUROPÄISCHE PATENTSCHRIFT**

(45) Veröffentlichungstag der Patentschrift:
**24.10.84**

(21) Anmeldenummer: **79101591.0**

(22) Anmeldetag: **23.05.79**

(51) Int. Cl.³: **G 01 D 5/26,** G 01 P 15/08,
G 01 H 9/00, G 08 C 19/36

(54) **Stabilisiertes faseroptisches Messgerät.**

(30) Priorität: **02.06.78 SE 7806486**

(43) Veröffentlichungstag der Anmeldung:
**12.12.79 Patentblatt 79/25**

(45) Bekanntmachung des Hinweises auf die Patenterteilung:
**24.10.84 Patentblatt 84/43**

(84) Benannte Vertragsstaaten:
**CH DE FR GB IT NL**

(56) Entgegenhaltungen:
**WO - A - 79/00180
DE - A - 1 698 013
DE - A - 2 620 914
FR - A - 2 319 120
GB - A - 1 401 699
NL - A - 7 811 205
US - A - 3 590 259
US - A - 3 602 037
US - A - 3 919 546**

**IBM TECHNICAL DISCLOSURE BULLETIN Band 18, Juli 1975, Nr. 2, New York (US) C.H. FIESTEL:
"Self-Calibrating Optical Position Sensor"; Seiten 302-303**

(73) Patentinhaber: **ASEA AB, S-721 83 Västeras (SE)**

(72) Erfinder: **Adolfsson, Morgan, Dipl.-Ing., Sigfrid Edströms
Gata 87, S-724 66 Västeras (SE)**

(74) Vertreter: **Boecker, Joachim, Dr.-Ing.,
Rathenauplatz 2-8, D-6000 Frankfurt a.M. 1 (DE)**

## Beschreibung

Die Erfindung betrifft ein stabilisiertes faseroptisches Messgerät gemäss dem Oberbegriff des Anspruches 1. Ein solches Messgerät ist im wesentlichen bekannt aus der US-A-3 781 092.

Um bei solchen Messgeräten mit analogen faseroptischen Gebern fehlerfrei messen zu können, müssen die Instabilitäten kompensiert werden, die in Leuchtdioden, Fotodioden, Fotostromverstärkern, Leuchtdiodenelektroniken, Fasern, Faserkontakten, Faserhaltern, Gebermechaniken usw. auftreten.

Das aus der US-A-3 781 092 bekannte faseroptische Messgerät dient der Überwachung lebensnotwendiger Funktionen des menschlichen Körpers. In der Elektronikeinheit dieses Messgerätes befindet sich eine Lichtquelle, deren Licht über je eine Faser zu je einer Messstelle geleitet wird, an der sich ein Geber befindet, der das Licht in Abhängigkeit der Messgrösse moduliert. Das modulierte Licht wird über eine andere Faser einem Anzeigegerät zugeführt. Zur Kontrolle der ordnungsgemässen Arbeitsweise des Messgerätes wird das Licht der Lichtquelle ferner über einen zusätzlichen Lichtleiter einem zusätzlichen Geber zugeführt, der von keiner Messgrösse beaufschlagt wird. Das Licht von diesem Geber wird über eine weitere Faser ebenfalls dem Anzeigegerät zugeführt. Eine Kompensation des Messsignals gegen die obengenannten Fehlereinflüsse ist in der Druckschrift nicht angesprochen, jedoch ist es denkbar, durch Quotientenbildung aus dem Messsignal und dem Signal von dem nichtmessenden Geber eine gewisse Kompensation der Fehlereinflüsse zu erzielen. Da jedoch bei dieser bekannten Anordnung das Licht bereits vor seiner Aussendung zur Messstelle durch einen Strahlenteiler in eine Mess- und eine Stabilisierungskomponente zerlegt wird, wären bei der genannten Weiterentwicklung der bekannten Anordnung zwei verschiedene Kanäle für die Messkomponente und für die Stabilisierungskomponente erforderlich. Da die Dämpfung auf getrennten Kanälen, beispielsweise infolge unterschiedlicher Biegung der Fasern, unterschiedlicher Reflexionen und Alterrungszuständen, unterschiedlich sein kann, wäre eine vollständige Kompensation der obengenannten Störeinflüsse bei dem bekannten Messgerät nicht erzielbar.

Aus der US-A-3 590 259 ist ein als kompakte Einheit gebautes Druckmessgerät bekannt, das in eine Wand einschraubbar ist, hinter der sich das Medium befindet, dessen Druck gemessen werden soll. Mit einem faseroptischen Messgerät nach dem Oberbegriff des Anspruches 1, bei dem die Elektronikeinheit einerseits und der Geber anderseits an beliebig weit entfernten Orten aufgestellt sind und durch eine beliebig lange flexible lichtleitende Faser miteinander verbunden sind, ist ein solches kompaktes Gerät nicht vergleichbar. Bei dem bekannten Gerät wird das Licht in zwei Strahlengänge aufgeteilt, die über getrennte Linsensysteme übertragen werden. Das Licht des einen Strahls ist von der Messgrösse abhängig, und das Licht des anderen Strahls wird mit konstanter Frequenz zerhackt. Der zerhackte Strahl dient dazu, die Messgrösse von Schwankungen der Lichtquelle und der Empfindlichkeit des Lichtempfängers unabhängig zu machen. Würde man das kompakte Messgerät in einen Geber und eine elektronikeinheit aufteilen, die über lichtleitende Fasern verbunden sind, so würde man ein System schaffen, bei dem von der Lichtquelle zwei Fasern zum Geber hingeführt und zwei Fasern vom Geber zum Lichtempfänger zurückgeführt werden müssten. Die Anordnung würde mit zwei selbständigen getrennten Kanälen arbeiten. Dies würde wieder bedeuten, dass unterschiedliche Dämpfungen in den beiden Kanälen zu Fehlern in der Messgrösse führen würden. Solche unterschiedlichen Dämpfungen sind auch bei Verwendung gleicher Materialien nicht vermeidbar, da die Dämpfung bei lichtleitenden Fasern stark von der Stärke und Art der Biegung und sonstigen mechanischen Einflüssen abhängig ist.

Aus der DE-A-1 698 013 ist ein Messgerät zur fotoelektrischen Messung der Lage eines Gegenstandes bekannt. Das Übertragungsglied für das Messlicht besteht aus einem starren, langgestreckten flachen Körper, durch dessen eine Hälfte in Längsrichtung das Licht zum Messobjekt hingeführt und durch dessen andere Hälfte vom Messobjekt zurückgeführt wird. An der Messstelle wird das Licht in Abhängigkeit der Lage des Messobjektes mehr oder weniger stark absorbiert. Zur Messung über längere Entfernungen zwischen dem Messobjekt und der Messelektronik ist das Gerät nicht geeignet. Um die Messgrösse gegenüber Intensitätsschwankungen der Lichtquelle zu stabilisieren, wird das ausgesandte Licht von einer zusätzlichen Fotodiode gemessen, wobei mit Hilfe eines Regelkreises und Vergleichs mit einem Sollwert dieser Messwert durch Steuerung der Lichtquelle auf den vorgeschriebenen Sollwert gebracht wird. Um temperaturbedingte Änderungen der Kennlinie der Fotodiode für das Nutzsignal zu kompensieren, ist die zusätzliche Fotodiode in räumlicher Nähe der Fotodiode für das Nutzsignal angeordnet. Fehler, die durch unterschiedliche Dämpfungen der lichtleitenden Verbindung zwischen Messelektronik und Messobjekt auftreten können, werden durch die bekannte Kompensationseinrichtung nicht erfasst.

Der Erfindung liegt die Aufgabe zugrunde, ein faseroptisches Messgerät der eingangs genannten Art zu entwickeln, bei dem nicht nur in der Elektronikeinheit auftretenden Variationen der Kennlinien der Bauelemente kompensiert werden, sondern auch die durch Dämpfungen und andere Einflüsse in der optischen Verbindung auftretenden Variationen der Übertragungsparameter kompensiert werden, wobei für diese Kompensation keine zusätzlichen optischen Verbindungen zwischen Geber und Elektronikeinheit notwendig ist.

Zur Lösung dieser Aufgabe wird ein faseroptisches Messgerät nach dem Oberbegriff des Anspruches 1 vorgeschlagen, welches erfindungsgemäss die im kennzeichnenden Teil des Anspruches 1 genannten Merkmale hat.

Vorteilhafte Ausgestaltungen der Erfindung sind in den weiteren Ansprüchen genannt.

Das Messgerät, nach der Erfindung dient zur Messung von verschiedenen physikalischen Grössen, wie Lage, Beschleunigung, Kraft, Druck, Dehnung, Temperatur usw. Das zum Geber gesandte Licht wird dabei vom Geber in mindestens zwei Komponenten aufgeteilt, nämlich in eine Messkomponente, die Informationen über die zu messende Grösse und den Zustand der Optoelektronik enthält, und mindestens eine Stabilisierungskomponente, die Informationen über den Zustand der Optoelektronik enthält. Die Messkomponente und die Stabilisierungskomponente werden mittels elektronischer Filter voneinander getrennt, die mit dem optischen Detektor des Messgerätes verbunden sind, und nach der Demodulation der Stabilisierungskomponente erhält man ein Signal, das auch als «Kompensationssignal» bezeichnet werden kann und dazu dient, die Abhängigkeit des Messsignals von den oben genannten Instabilitäten im Messgerät zu beseitigen. Das Messsignal kann dabei durch Quotientenbildung aus der Messkomponente und der Stabilisierungskomponente gewonnen werden oder aus der Messkomponente direkt, wenn die Stabilisierungskomponente einen Regler für die Speiseleistung der Lichtquelle des Messgerätes oder den Verstärker für das Detektorsignal des Messgerätes steuert.

Anhand der in den Figuren gezeigten Ausführungsbeispiele soll die Erfindung näher erläutert werden. Es zeigen:

Fig. 1 die Regelung der Lichtquelle mit einem nichtperiodischen Signal,

Fig. 2 die Regelung der Lichtquelle mit einem periodischen Signal,

Fig. 2a eine Variante mit elektrischer Modulation,

Fig. 3 die Regelung der Lichtquelle mit einer Rechteckwelle,

Fig. 4 eine Geberanordnung mit einer Faser und Quotientenbildung,

Fig. 4a eine Variante von Leuchtdiode und Fotodiode,

Fig. 5 einen Geber mit einer Faser und einen das Faserende zur Hälfte überdeckenden Spiegel,

Fig. 6 einen Geber mit einer Faser und zwei relativ zueinander beweglichen Rastern,

Fig. 7 einen weiteren Geber mit einer Faser und zwei relativ zueinander beweglichen Rastern,

Fig. 8 einen Geber mit optischen Dünnfilm-Modulatoren.

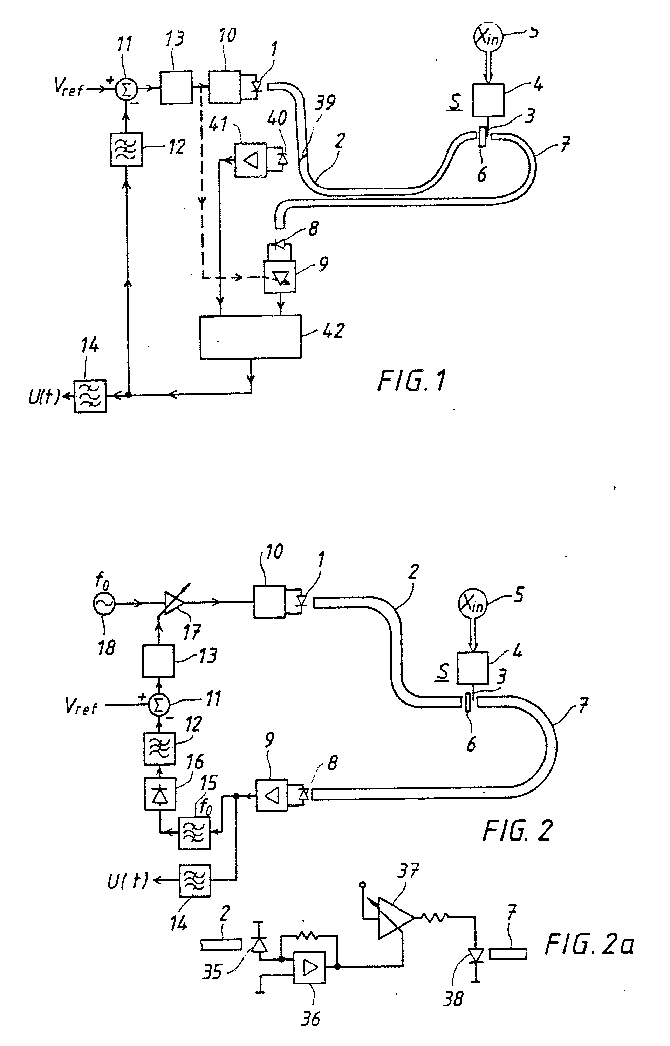

Fig. 1 zeigt ein Messgerät zur dynamischen Messung, in welchem eine Leuchtdiode 1 ein konstantes Licht in eine lichteinleitende Faser 2 sendet. Zwischen dem Ausgangsende dieser Faser und dem Eingangsende einer lichtfortleitenden Faser 7 ist ein Luftspalt vorhanden, in dem ein Schirm 3 eines allgemein mit S bezeichneten Gebers beweglich angeordnet ist. Der Geber enthält ein mechanisches System 4, mit dessen Hilfe eine Messgrösse 5 in eine Bewegung des Schirms 3 umgewandelt wird, der sich in dem genannten Luftspalt befindet. Das System 4 arbeitet in einem bestimmten Frequenzbereich, und die Bewegung des Schrims 3 im Luftspalt verursacht eine Intensitätsmodulation des in die lichtfortleitende Faser 7 einfallenden Lichtes. Um einen linearen Zusammenhang zwischen der Bewegungsamplitude des Schirms 3 und der Variation des Lichts in der Faser 7 zu erreichen, ist im Luftspalt ein linearisierender Spalt 6 angeordnet. Der Spalt kann so ausgeführt sein, dass man ein beispielsweise rechteckiges Strahlenbündel erhält, dessen Querschnitt davon bestimmt wird, ein wie grosser Teil des Spalts vom Schirm abgedeckt ist. Das Licht in der lichtfortleitenden Faser 7 wird auf eine Fotodiode 8 geleitet und in einem Verstärker 9 auf ein geeignetes Niveau verstärkt. Ein Teil des von der Leuchtdiode 1 in die Faser 2 gelangenden Lichtes wird über eine schräg verlaufende Verbindungsstelle 39 in der Faser 2 auf die Fotodiode 40 geleitet, deren Fotostrom in einem Verstärker 41 verstärkt wird. In einer Elektronikeinheit 42 wird eine Kompensation durchgeführt, wobei die Störungen am Ausgang des Verstärkers 41 mit den Störungen am Ausgang des Verstärkers 9 derart kompensiert werden, dass das Ausgangssignal von der Elektronikeinheit 42 aus dem Detektorsignal besteht, nachdem die Störungen von der Leuchtdiode 1 fortkompensiert sind. Die einfachste Art, diese Kompensation durchzuführen, besteht darin, dass man das Ausgangssignal des Verstärkers 41 vom Ausgangssignal des Verstärkers 9 subtrahiert und die Verstärkung des Verstärkers 41 so steuert, dass man ein Minimum an Störungen am Differenzsignal erhält, welches dann auch das Ausgangssignal von der Elektronikeinheit 42 ist. Das Ausgangssignal von der Elektronikeinheit 42 wird einerseits einem Tiefpassfilter 12 und andererseits einem Bandpassfilter 14 zugeführt, dessen Durchtrittsfrequenzbereich dem Frequenzbereich des Systems 4 entspricht. Das Ausgangssignal $U(t)$ des Filters 14 stellt das Messsignal des Messgerätes dar. Das Ausgangssignal des Tiefpassfilters 12 wird mit einem Sollwertsignal $V_{ref}$ in einem Summierungsglied 11 verglichen, und das Ausgangssignal dieses Summierungsgliedes steuert einen Regler 13, der das Speiseglied 10 der Leuchtdiode 1 auf solche Weise steuert, dass das Ausgangssignal vom Filter 12 gleich $V_{ref}$ wird. Dadurch erhält man eine Kompensation für die Parametervariationen in dem Speiseglied 10, der Leuchtdiode 1, der Faser 2, der Faser 7, der Fotodiode 8 mit Ausnahme von Nullpunktsveränderungen und dem Verstärker 9. Durch die gestrichelte Linie vom Ausgang des Reglers 13 zum Verstärker 9 wird angedeutet, dass der Regler 13 auch die Verstärkung des Verstärkers 9 steuern kann, wobei das Speiseglied 10 mit einer konstanten Eingangsgrösse beaufschlagt wird.

Die Anordnung nach Fig. 1 kompensiert nicht die Nullpunktsveränderungen des Fotodetektors. Wenn eine solche Kompensation erforderlich ist, wird Wechsellicht sowohl für die Mess- wie für die Regelkomponente nach Fig. 2 verwendet. Die Teile 1–10 in Fig. 2 sind mit den Teilen 1–10 in Fig. 1 identisch. Das Speiseglied 10 für die Leuchtdiode 1 wird hier mit einer Wechselspannung mit der Frequenz $f_0$ von einem Oszillator 18 über einen regelbaren Verstärker 17 gespeist. Der Ausgang des Verstärkers 9 ist an ein Bandpassfilter 15 mit der Durchtrittsfrequenz $f_0$ angeschlossen. Das gefilterte Signal wird in einem Gleichrichter 16 gleichgerichtet und über das Tiefpassfilter 12 einem Summierungsglied 11 zugeführt, wo das Signal mit der Sollwertspannung $V_{ref}$ verglichen wird. Das Ausgangssignal vom Glied 11 wird als Fehlersignal einem Regler 13 zugeführt, der den Verstärker 17 steuert, dessen Ausgangssignal das Speiseglied 10 steuert. Die Leuchtdiode 1 wird so gesteuert, dass das Ausgangssignal vom Tiefpassfilter 12 auf $V_{ref}$ geregelt wird. Der Verstärker 17 steuert die Amplitude des Wechselsignals, das vom Oszillator 18 erzeugt wird. In seiner einfachsten Form kann der steuerbare Verstärker 17 aus einem Multiplikatorglied oder aus einem regelbaren Spannungsteiler mit einem vom Regler 13 spannungsgesteuerten Feldeffekttransistor bestehen. Die Frequenz $f_0$ des Oszillators 18 soll mindestens doppelt so gross sein wie die höchste vorkommende Frequenz des Messsignals zur Erfüllung des Abtasttheorems. Das Messsignal erhält man durch Demodulation des Ausgangssignals vom Verstärker 9 im Filter 14. Die Frequenz $f_0$ kann als Trägerfrequenz des Messgerätes bezeichnet werden, und man kann sagen, dass die Trägerwelle von der Bewegung des Schirms 3 im Geber amplitudenmoduliert wird.

Fig. 2a zeigt, dass das Messsignal ein elektrisches Signal sein kann. Das Licht von der Leuchtdiode 1 geht durch die Faser 2 zu der im Geber angeordneten Fotodiode 35, deren Fotostrom in einem Verstärker 36 verstärkt und danach einem regelbaren Verstärker 37 als Steuersignal zugeführt wird. Die Messspannung $U_m$ wird im Verstärker 37 verstärkt und speist die Leuchtdiode 38, die Licht in die lichtfortleitende Faser 7 zur Fotodiode 8 sendet. Die Elektronik zur Erzeugung des Messsignals und zur Steuerung der Leuchtdiode 1 ist dieselbe, wie in Fig. 2 dargestellt. Die Modulation des Signals in der Faser 2 erfolgt in diesem Fall auf elektrischem Wege statt auf mechanischem Wege, wie in Fig. 1 und 2 gezeigt.

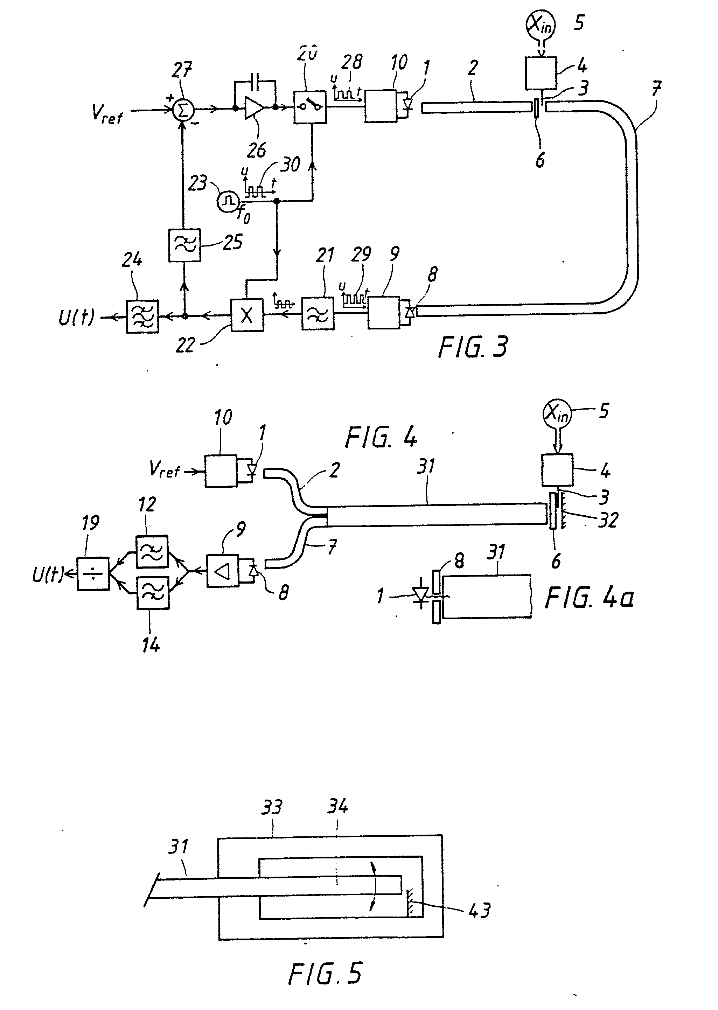

Fig. 3 zeigt ein Messgerät mit einem etwas einfacheren Elektroniksystem als das in Fig. 2. Diese Vereinfachung wird dadurch erreicht, dass die Trägerwelle eine Rechteckwelle 28 ist, die man vom Ausgang eines Analogschalters 20 erhält. Dabei erhält man vom Fotostromverstärker 9 eine vom Sensor amplitudenmodulierte Rechteckwelle 29. Diese Rechteckwelle wird über ein Hochpassfilter 21 einem Multiplikator 22 zugeführt, in dem das Ausgangssignal des Filters 21 mit dem Ausgangssignal 30 eines Rechteckwellenoszillators 23 multipliziert wird. Das Messsignal erscheint am Ausgang eines Bandpassfilters 24, während der Zustand der Optoelektronik am Ausgang eines Tiefpassfilters 25 entnommen wird. Die obere Grenzfrequenz dieses Filters wählt man niedriger als die untere Grenzfrequenz des Messsignals. Das Ausgangssignal des Tiefpassfilters 25 wird in einem Summierungsglied 27 mit dem Sollwertsignal $V_{ref}$ verglichen, und das Differenzsignal wird einem Integrator 26 zugeführt, der die Amplitude der Rechteckwelle für das Speiseglied 10 steuert, so dass das Ausgangssignal des Filters 25 gleich $V_{ref}$ wird. Dadurch wird eine Kompensation der Parametervariationen des Optogliedes sichergestellt. Das Signal 30 vom Oszillator 23 wird zur Steuerung des Schalters 20 verwendet, und die Frequenz $f_0$ muss mindestens doppelt so gross gewählt werden, wie die höchste vorkommende Messfrequenz.

Die anfangs beschriebenen Anordnungen eignen sich auch für faseroptische Messgeräte mit nur einer Faser zwischen Geber und Leucht- und Fotodiode. Eine solche Anordnung ist in Fig. 4 dargestellt. Das von der Leuchtdiode 1 ausgestrahlte Licht wird über die Faser 2 in eine Faser 31 eingeleitet, die das Licht zum Geber leitet. Dieser besteht aus einem linearisierenden Spalt 6 in dem Luftspalt, in dem sich der Schirm 3 bewegt, sowie aus einem Spiegel 32, der einen Teil des ausgesandten Lichtes in die Faser 31 zurückreflektiert. Von dieser Faser wird ein Teil des reflektierten Lichtes über die Faser 7 auf die Fotodiode 8 geleitet. Der Fotostrom dieser Diode wird vom Verstärker 9 verstärkt und von den Filtern 14 und 12 in eine Mess- und eine Stabilisierungskomponente aufgeteilt. Die Ausgangssignale von den beiden Filtern werden einem Divisionsglied 19 zugeführt, dessen Ausgangssignal, das aus dem Quotienten aus den beiden genannten Komponenten besteht, das Messsignal U(t) bildet. Dieses Divisionsglied kompensiert das Messsignal hinsichtlich der Instabilitäten in der Optoelektronik und der Faseroptik. Statt der gezeigten optischen Sternschaltung zwischen den Fasern 2, 7 und 31 kann eine Leucht- und Fotodiodenanordnung gemäss Fig. 4a verwendet werden, wodurch man weniger Lichtverluste erhält. Die Leuchtdiode 1 sendet Licht in die Mitte der Stirnfläche der Faser 31, während die ringförmige Fotodiode 8, die konzentrisch um die Leuchtdiode angebracht ist, das vom Spiegel 32 in die Faser 31 hineinreflektierte Licht aufnimmt.

Fig. 5 zeigt eine Variante des optischen Gebers gemäss Fig. 4. Die Faser 31 ist hier in einem Gebergehäuse 33 befestigt, und der Teil 34 der Faser, der sich innerhalb des Gebergehäuses befindet, kann wie ein einseitig fest eingespannter Balken schwingen, wobei sich die Stirnfläche des Faserteils 34 vor einem Spiegel 43 bewegt, der im Ruhezustand des Teils 34 dessen Stirnfläche zur Hälfte überdeckt. Wenn sich die Stirnfläche des Teils 34 im Sinne der Figur nach oben bewegt, dann wird weniger Licht in die Faser hineinreflektiert, und wenn sich das Faserende nach unten bewegt, wird mehr Licht in die Faser hineinreflektiert. Dagegen ist der Geber gegenüber Bewegungen senkrecht zur Zeichenebene unempfindlich. Da das Faserende sich wie ein mechanisches Schwingungssystem zweiter Ordnung verhält, dient der Geber als ein optisches Akzelerometer.

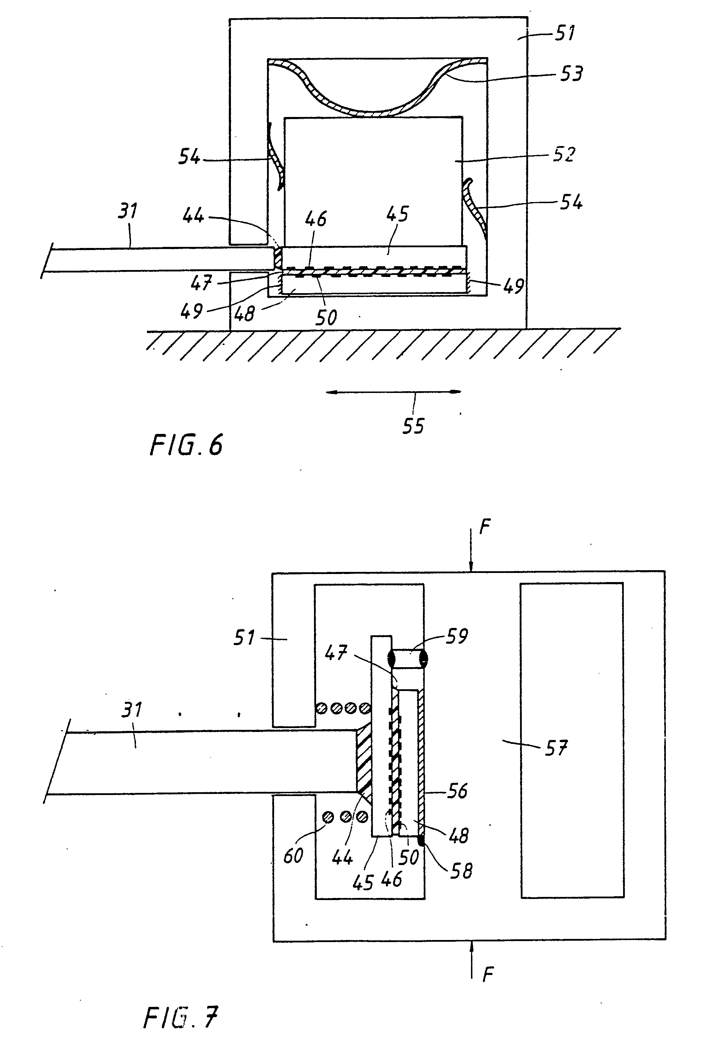

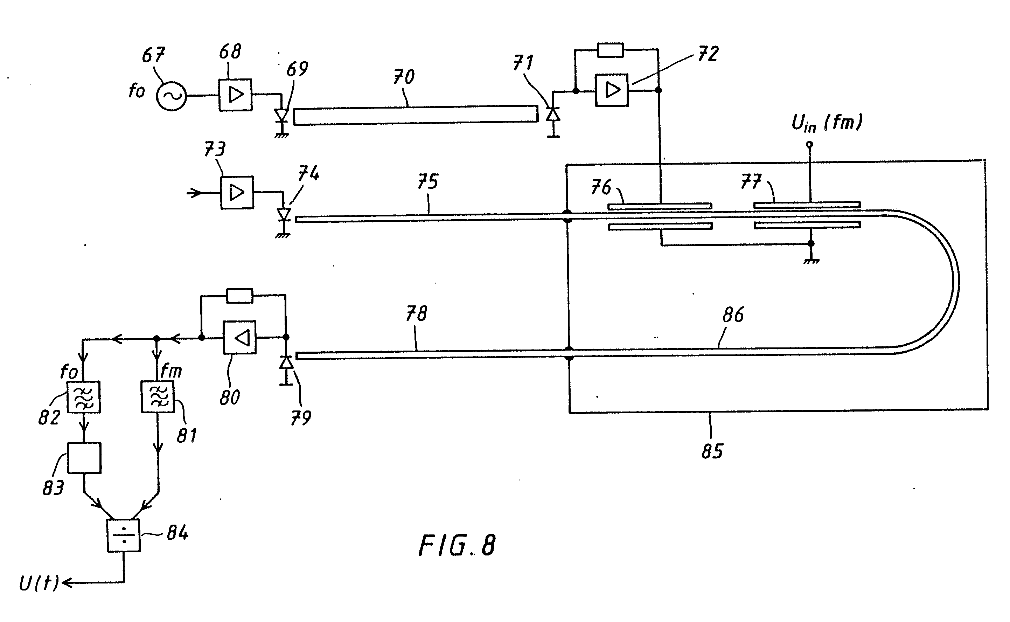

Um die Empfindlichkeit und gleichzeitig die Linearität des geometrisch-optischen Gebers zu steigern, kann eine Rasteranordnung nach den Fig. 6 und 7 angewandt werden. Gemäss Fig. 6 wird das Licht von der Faser 31 über ein eine Anpassung der Brechungsindices bewirkendes Material 44, d.h. ein solches, welches einen gleichen optischen Index hat, in eine lichtleitende Glasoder Quarzplatte 45 geleitet. Diese Platte ist auf der Unterseite mit einem dünnen, reflektierenden Raster 46 belegt, das beispielsweise durch ein Verdampfungsverfahren aufgebracht ist. Durch dieses Raster wird ein Teil des Lichtes über ein «indexmatchendes» Material 47 und ein anderes Raster 50 in eine lichtleitende Platte 48 geleitet. Diese Platte ist an ihren Stirnflächen mit reflektierenden Schichten 49 belegt, mit deren Hilfe das Licht zurückreflektiert wird, und zwar durch das Material 47 in die Platte 45 und von dort in die Faser 31. Die Menge des in die Faser 31 zurückgelangenden Lichtes wird von der Verbindung zwischen den Platten 45 und 48 bestimmt, die ihrerseits von der relativen Lage zwischen den Rastern 46 und 50 bestimmt wird. Die Platte 48 ist am Boden eines Gebergehäuses 51 befestigt, während die Platte 45 an einem beweglichen Massekörper 52 befestigt ist. Dieser Massekörper wird von einer Feder 53 nach unten gedrückt, um den Abstand zwischen den Rastern 46 und 50 möglichst klein zu halten. In seitlicher Richtung wird der Massekörper 52 von Federn 54 festgehalten. Der beschriebene Geber arbeitet wie ein Akzelerometer, das in Richtung des Pfeils 55 empfindlich ist, wobei die Gravitationsmasse 52 und die Federkonstante der Federn und eventuell des «indexmatchenden» Materials 47 bestimmt wird. Alternativ kann das Licht aus der Faser 31 direkt in die untere Platte 48 geleitet werden, wobei dann die obere Platte 45 mit spiegelnden Stirnseiten versehen wird.

Fig. 7 zeigt, dass das Licht aus der Faser 31 senkrecht zu den Flächen der Platten 45 und 48 in die Raster hineingeleitet wird. Das Licht dringt über das «indexmatchende» Material 44 in die Platte 45 ein und von dort durch das Raster 46, das Material 47 und das Raster 50 in die Platte 48. Es wird dann von einer spiegelnden Fläche 56 auf der Rückseite der Platte 48 reflektiert und geht durch die Raster zurück, wobei ein Teil des reflektierten Lichtes zurück in die Faser 31 gelangt. Dieser Geber arbeitet wie ein Dehnungsgeber. Die Platte 48 ist an einem Punkt 58 mit ihrem unteren Ende an einer Kraftmesszelle 57 befestigt, während die Platte 45 mit ihrem oberen Ende über einen Bügel 59 mit der Kraftmesszelle 57 verbunden ist. Wenn eine Kraft F auf die Kraftmesszelle 57 wirkt, wird diese zusammengedrückt, wobei sich die Raster 46 und 50 relativ zueinander verschieben und eine Modulation des von der Faser 31 eingeleiteten Lichtes verursachen. Um den Abstand zwischen den beiden Rastern möglichst klein zu halten, ist zwischen dem Gebergehäuse 51 und der Platte 45 eine Feder 60 angeordnet.

Fig. 8 zeigt ein Messgerät mit optischen Dünnfilm-Modulatoren 76 und 77. Diese modulieren das Licht in Dünnfilmlichtleiter 86 in dem Dünnfilmsubstrat 85. Licht von einem Laserhalbleiter 74, der von einem Speiseglied 73 gespeist wird, wird in eine «Monomod»-Faser 75 eingeleitet, die an den Lichtleiter 86 angeschlossen ist, der beispielsweise ein Ti-diffundiertes $LiNbO_3$-Kristall sein kann. Dieses Licht wird von den genannten elektrooptischen Modulatoren 76 und 77 moduliert, bevor es in eine Faser 78 geleitet wird, die das modulierte Licht zu einem Fotodetektor 79 leitet, dessen Fotostrom in einem Verstärker 80 verstärkt wird. Der Modulator 77 wird von dem Messsignal $U_{in}$ gesteuert, während der andere Modulator 76 von einer Fotodiode 71 über einen Strom/Spannungsumwandler 72 gesteuert wird. Die Fotodiode 71 wird über eine Faser 70 mit moduliertem Licht von einer Leuchtdiode oder einem Laserhalbleiter 69 beaufschlagt, die/der von einer Speisevorrichtung 68 und einem Oszillator 67 mit der Frequenz $f_o$ gespeist wird. Das empfangene Signal, das am Ausgang des Verstärkers 80 auftritt, wird von zwei Bandpassfiltern 81 bzw. 82 in eine Mess- und eine Stabilisierungskomponente zerlegt. Nach der Demodulation der Stabilisierungskomponente $f_o$ in einem Demodulator 83 und der Quotientenbildung aus der Messkomponente $f_m$ und dem Stabilisierungssignal, dem die demodulierte Stabilisierungskomponente $f_o$ entspricht, erhält man am Ausgang des Divisionsgliedes 84 ein Messsignal, das durch die Quotientenbildung gegenüber Instabilitäten in der Optoelektronik und der Faseroptik kompensiert ist.

Zu der Wirkungsweise der im Zusammenhang mit der Elektronikeinheit 42 in Fig. 1 oben (Seite 3 unten) genannten Kompensation wird ergänzend bemerkt: Die Intensität des von der Leuchtdiode 1 ausgesandten Lichtes soll konstant sein. In der Praxis lässt sich diese Konstanz infolge verschiedener Störeinflüsse nicht völlig verwirklichen. Vielmehr sind dem konstanten Wert Störungen (Oberwellen) überlagert. Diese können im Ausgangssignal des Detektors 8 ein in Wirklichkeit nicht vorhandenes Messsignal vortäuschen. Aus diesem Grunde wird ein Teil des von der Leuchtdiode 1 in die Faser 2 gesandten Lichtes über die Verbindungsstelle 39 und die Fotodiode 40 abgeleitet. Dieses Licht wird so weit verstärkt, dass die Störungen genau so gross werden wie die Störungen, die über die Fasern 2 und 7 und den Detektor 8 an den Ausgang des Verstärkers 9 gelangen. Werden dann die beiden Ausgangssignale der Verstärker 41 und 9 voneinander subtrahiert, dann sind die im Licht der Diode 1 enthaltenen Störungen im Differenzsignal nicht mehr vorhanden. Bei einer gleichmässigen Verstärkung des von der Fotodiode 40 aufgenommenen Lichtes würde bei diesem Vorgang auch der konstante Anteil (Mittelwert) des von der Diode 1 ausgesandten Lichtes im Ausgangssignal der Elektronikeinheit 42 verschwinden. Da dieser konstante Anteil jedoch für die Regelung der Lichtintensität der Leuchtdiode 1 über den durch die Glieder 12 und 11 geschlossenen Regelkreis erforderlich ist, wird dieser konstante Anteil in den Verstärker nicht oder nur in geringerem Masse als die störenden Oberwellen verstärkt. Auf diese Weise bleibt der konstante Anteil ganz oder teilweise im Ausgangssignal der Elektronikeinheit 42 erhalten, während die überlagerten Störungen beseitigt sind.

**Patentansprüche**

1. Stabilisiertes faseroptisches Messgerät zur Messung von dynamischen Verläufen physikalischer grössen mit einem von der zu messenden physikalischen Grösse ($X_{in}$, $U_{in}$ beaufschlagten Geber (S, 77), einer einen Fotodetektor enthaltenden Elektronikeinheit und einer faseroptischen Verbindung (2, 7, 31) zwischen Geber und Elektronikeinheit, wobei die Elektronikeinheit mittels mindestens einer Lichtquelle (1) ein Lichtsignal erzeugt, das über die faseroptische Verbindung (2, 31) zum Geber (S, 77) geleitet wird, der das Lichtsignal in Abhängigkeit von der zu messenden physikalischen Grösse ($X_{in}$, $U_{in}$) in seiner Intensität moduliert, mit Mitteln in der Elektronikeinheit, welche aus dem vom Geber zurückkommenden modulierten Licht eine Messkomponente ableiten, dadurch gekennzeichnet, dass die Elektronikeinheit Mittel zur Erzeugung einer Stabilisierungskomponente aus dem Licht der Lichtquelle aufweist, dass das Licht aus dem die Stabilisierungskomponente und die Messkomponente gewonnen werden, über eine einzige optische Faser (2) zum Geber (S, 77) geleitet und über eine weitere einzige optische Faser (7) vom Geber zur Elektronikeinheit zurückgeführt wird, wo es durch den Fotodetektor (8, 79) in ein elektrisches Signal umgewandelt wird, dass die Mittel zur Ableitung der Messkomponente und die Mittel zur Erzeugung der Stabilisierungskomponente Filter (12, 14, 15, 24, 25) zur frequenzmässigen Trennung von Messkomponente und Stabilisierungskomponente sind, wobei der Frequenzbereich der Messkomponente vom Frequenzbereich der Variationen der Messgrösse und der Frequenzbereich der Stabilisierungskomponente von der Frequenz ($f_o$) der Speisespannung der Lichtquelle (1) bestimmt ist, welche Frequenz ($f_o$) unter Einschluss des Wertes Null ausserhalb des Frequenzbereiches der zu messenden Grösse ($X_{in}$, $U_{in}$) liegt, und dass in der Elektronikeinheit entweder Einrichtungen zur Bildung des Quotienten aus den beiden Komponenten vorhanden sind, wobei der Quotient dann ein stabilisiertes Messsignal darstellt, oder Einrichtungen zum Vergleich der Stabilisierungskomponente mit einem Sollwert ($V_{ref}$) vorhanden sind, wobei die Differenz aus Stabilisierungskomponente und Sollwert die Intensität der Speisespannung der Lichtquelle (1) steuert.

2. Messgerät nach Anspruch 1, dadurch gekennzeichnet, dass die Differenz aus der Stabilisierungskomponente und dem Sollwert ($V_{ref}$) einem Regler (13) zugeführt wird zur Steuerung des Speisegliedes (10) für die Lichtquelle (1) und/oder zur Steuerung der Verstärkung (9) des Ausgangssignals des Detektors (8).

3. Messgerät nach Anspruch 1 oder 2, dadurch gekennzeichnet, dass die Speisespannung der Lichtquelle (1) mit dem Signal von einem Oszillator (18, 67) mit dessen Frequenz ($f_o$) moduliert ist, dass die Stabilisierungskomponente mit Hilfe eines elektronischen Filters (12) erzeugt wird, welches an den optischen Detektor (8) angeschlossen ist und auf die Oszillatorfrequenz ($f_o$) abgestimmt ist, und dass die Messkomponente mit Hilfe eines weiteren mit dem Detektor (8) verbundenen elektronischen Filters (14) gebildet wird, welches die Stabilisierungskomponente unterdrückt.

4. Messgerät nach einem der vorhergehenden Ansprüche, dadurch gekennzeichnet, dass der Geber lichtsignalmodulierende Mittel aufweist, die aus einem Material bestehen, dessen Lichtabsorption in mindestens einem Teil des Emissionsspektrums der Lichtquelle (1) von der zu messenden Grösse abhängig ist.

5. Messgerät nach Anspruch 1, 2 oder 3, dadurch gekennzeichnet, dass der Geber lichtsignalmodulierende Mittel aufweist, die aus relativ zueinander beweglichen Rastern (46, 50) bestehen, deren Relativbewegung von der zu messenden Grösse abhängig ist, dass die Raster (46, 50) sich teilweise gegenseitig überlappend angeordnet sind, dass der Zwischenraum zwischen den Rastern mit einem eine Anpassung der Brechungsindices bewirkenden Material (47) gefüllt ist, und dass eine Anordnung (52, 53) zum Aneinanderdrücken der Raster vorhanden ist.

6. Messgerät nach Anspruch 1, dadurch gekennzeichnet, dass der Geber lichtsignalmodulierende Mittel aufweist, die aus einem elektronischen Glied (35–38) bestehen, das einerseits einen Fotodetektor (35) enthält zur Umwandlung des optischen Eingangssignals in ein elektrisches Signal, das von der zu messenden Grösse beeinflusst ist, und anderseits Anordnungen (38) zur Umwandlung des elektrischen Signals in ein optisches Signal.

7. Messgerät nach Anspruch 1, dadurch gekennzeichnet, dass ein Teil des optischen Signals von der Lichtquelle (1) direkt auf einen Fotodetektor (40) geleitet wird, dessen Ausgangssignal in einer Elektronikschaltung (42) mit der Messkomponente des Ausgangssignals des Gebers verarbeitet wird, und dass das Ausgangssignal der Elektronikschaltung (42) zur Unterdrückung der in der Messkomponente enthaltenen Störungen benutzt wird, die von der Lichtquelle (1) und deren Speiseglied (10) stammen.

8. Messgerät nach Anspruch 5, dadurch gekennzeichnet, dass die Raster (46, 50) auf Platten (45, 48) aus lichtleitendem Material angebracht sind und dass eine Faser (31) zur Einleitung von Licht in den Geber und zum Fortleiten von vom Geber zurückgegebenen Lichtes vorhanden ist, welche Faser an eine Fläche einer der Platten (45, 48) angeschlossen ist.

9. Messgerät nach Anspruch 1, dadurch gekennzeichnet, dass ein und dieselbe Faser (31) sowohl zur Leitung der Eingangs- wie der Ausgangssignale des Gebers verwendet wird, wobei die Faser in das Gebergehäuse (33) hineinragt und an der Durchtrittsstelle durch die Wand des Gebergehäuses derart festeingespannt ist, dass das Faserende (34) wie ein einseitig eingespannter Balken zu schwingen vermag, und dass vor einem Teil der Stirnseite des freien Faserendes eine spiegelnde Fläche (43) angeordnet ist.

10. Messgerät nach Anspruch 1, dadurch gekennzeichnet, dass der Geber lichtsignalmodulierende Mittel aufweist, die aus optischen Dünnfilmmodulatoren (76, 77) bestehen.

## Claims

1. Stabilized fiber optical measuring device for measuring dynamic variations of physical magnitudes comprising a transducer (S, 77) influenced by the physical magnitude to be measured ($X_{in}$, $U_{in}$), an electronic unit including a photo detector, and a fiber optical connection (2, 7, 31) between the transducer and the electronic unit, whereby the electronic unit generates a light signal by means of at least one light source, which light signal is transmitted to the transducer (S, 77) through the fiber optical connection (2, 31), which transducer modulates the intensity of the light signal in dependence upon the physical magnitude to be measured ($X_{in}$, $U_{in}$), the electronic unit comprising means for generating a measuring component from the modulated light coming back from the transducer, characterized in that the electronic unit includes means for producing a stabilizing component from the light from the light source, that the light from which the stabilizing component and the measuring component are generated is transmitted to the transducer (S, 77) through a single optical fiber (2) and is transmitted back from the transducer to the electronic unit through another single optical fiber (7), said light being transformed in the electronic unit into an electrical signal by said photo detector (8, 79), that the means for generating the measuring component and the means for generating the stabilizing component are filters (12, 14, 15, 24, 25) for a frequency-related separation of the measuring component and the stabilizing component, whereby the frequency range of the measuring component is determined by the frequency range of the variations of the physical magnitude and the frequency range of the stabilizing component is determined by the frequency ($f_o$) of the supply voltage of the light source (1), which frequency ($f_o$) has values outside the frequency range of the physical magnitude to be measured ($X_{in}$, $U_{in}$) including the value zero, and that the electronic unit either includes means for generating the ratio of the two components, whereby in this case the ratio represents a stabilized measuring signal, or includes means for comparing the stabilizing component with a reference value ($V_{ref}$), whereby the difference between said stabilizing component and said reference value controls the intensity of the supply voltage the light source (1).

2. Measuring device according to claim 1, characterized in that the difference between the stabilizing component and the reference value ($V_{ref}$) is supplied to a regulator (13) for controling the suppling unit (10) for the light source (1) and/or for controling the amplification (9) of the output signal of the detector (8).

3. Measuring device according to claim 1 or 2, characterized in that the supply voltage for the light source (1) is modulated with the frequency ($f_o$) of the signal from an oszillator (18, 67), that the stabilizing component is generated with the help of an electronic filter (12) connected to the optical detector (8) and tuned to the oszillator frequency ($f_o$), and that the measuring component is generated with the help of a further electronic filter (14), connected to the detector (8) and suppressing the stabilizing component.

4. Measuring device according to any of the preceding claims, characterized in that the transducer includes means for modulating light signals, which means consists of a material having light absorption characteristics which in at least part of the emission spectrum of said light source (1) are dependent upon the magnitude to be measured.

5. Measuring device according to claim 1, 2 or 3, characterized in that said transducer includes means for modulating light signals consisting of grids (46, 50) movable relative to one another, the relative movement of said grids being dependent upon the magnitude to be measured, that the grids (46, 50) are mounted to partially overlap one another, that the space between said grids is filled with a material (47) causing a matching of the refraction coefficients, and that there are means (52, 53) for pressing the grids against one another.

6. Measuring device according to claim 1, characterized in that the transducer includes light signal modulating means consisting of an electronic unit (35–38) which includes on the one hand a photo detector (35) for converting the optical input signal into an electronic signal being influenced by the magnitude to be measured, and on the other hand includes means (38) for converting the electric signal into an optical signal.

7. Measuring device according to claim 1, characterized in that part of the optical signal from the light source (1) is transmitted directly to the photo detector (40) the output signal of which being processed in an electronic circuit (42) along with the measuring component of the output signal of the transducer, and that the output signal from the electronic circuit (42) serves to suppress that noise in the measuring component emanating from the light source (1) and its supplying unit (10).

8. Measuring device according to claim 5, characterized in that the grids (46, 50) are mounted on plates (45, 48) of light conducting material, and that there is a fiber (31) for introducing light into the transducer and for transmitting light supplied back from the transducer, the fiber being connected to an area of one of the plates (45, 48).

9. Measuring device according to claim 1, characterized in that one and the same fiber (31) serves to transmit both the input and the output signals of the transducer, said fiber protruding into the housing (33) of the transducer and being rigidly fixed at the passage through the wall of the transducer housing in such a way, that the end portion (34) of the fiber is capable of oszillating like a beam being constrained on one of its ends, and that a reflecting surface is mounted in front of part of the end face of the free end portion of the fiber (43).

10. Measuring device according to claim 1, characterized in that the transducer includes light signal modulating means consisting of thin optical film modulators (76, 77).

**Revendications**

1. Appareil de mesure stabilisée à fibres optiques pour la mesure de variations dynamiques de grandeurs physiques, comportant un générateur de signaux (S, 77) recevant les grandeurs physiques à mesurer ($X_{in}$, $U_{in}$) une unité électronique contenant un détecteur photoélectrique, et une liaison par fibre optique (1, 7, 31) entre le générateur de signaux et l'unité électronique, cette unité électronique produisant à l'aide d'au moins une source lumineuse (1) un signal lumineux envoyé, par l'intermédiaire de la liaison à fibre optique (2, 31) au générateur de signaux (S,77) qui module, du point de vue de son intensité, le signal lumineux en fonction des grandeurs physiques à mesurer ($X_{in}$, $U_{in}$) des moyens dans l'unité électronique qui déduit à partir de la lumière modulée renvoyée par le générateur de signaux, une composante de valeur de mesure, caractérisé par le fait que l'unité électronique comporte des moyens pour produire une composante de stabilisation à partir de la lumière de la source lumineuse, que la lumière à partir de laquelle on obtient la composante de stabilisation et la composante de la valeur de mesure est envoyée, par l'intermédiare d'une fibre optique unique (2), au générateur de signaux (S, 77) et est renvoyée par l'intermédiaire d'une seconde fibre optique unique (7) du générateur de signaux à l'unité électronique où elle est transformée par le détecteur photoélectrique (8, 79) en un signal électrique, que les moyens pour dériver la composante des valeurs de mesure et les moyens pour produire la composante de stabilisation sont des filtres (12, 14, 15, 24, 25) pour séparer, du point de vue de la fréquence, la composante des valeurs de mesure et la composante de stabilisation, la gamme des fréquences de la composante des valeurs de mesure étant déterminée par la gamme des fréquences des variations de la grandeur des valeurs de mesure et la gamme des fréquences de la composante de stabilisation étant déterminée par la fréquence ($f_o$) de la tension d'alimentation de la source lumineuse (1), ladite fréquence ($f_o$), y compris la valeur nulle, se situant en dehors de la gamme des fréquences des grandeurs de mesure ($X_{in}$, $U_{in}$), et qu'il est prévu dans l'unité électronique soit des dispositifs pour former le quotient des deux composantes, ledit quotient représentant alors le signal de mesure stabilisé, soit des dispositifs pour comparer la composante de stabilisation avec une valeur de consigne ($V_{ref}$), la différence entre la composante de stabilisation et la valeur de consigne contrôlant l'intensité de la tension d'alimentation de la source lumineuse.

2. Appareil de mesure selon la revendication 1, caractérisé par le fait que la différence entre la composante de stabilisation et la valeur de consigne ($V_{ref}$) est appliquée à un régulateur (13) pour le contrôle du dispositif d'alimentation (10) pour la source lumineuse (1) et/ou pour la commande de l'amplification (9) du signal de sortie du détecteur (8).

3. Appareil de mesure selon la revendication 1 ou 2, caractérisé par le fait que la tension d'alimentation de la source lumineuse (1) est modulée avec le signal d'un oscillateur (18, 67), avec la fréquence ($f_o$) de ce dernier, que la composante de stabilisation est produite à l'aide d'un filtre électronique (12) qui est relié au détecteur optique (8) et qui est accordé à la fréquence de l'oscillateur ($f_o$), et que la composante des valeurs de mesure est formée à l'aide d'un second filtre électronique (14) qui est relié au détecteur (8), lequel filtre (14) supprime la composante de stabilisation.

4. Appareil de mesure selon l'une des revendications précédentes, caractérisé par le fait que le générateur de signaux comporte des moyens pour moduler le signal lumineux, lesquels moyens sont constitués par un matériau dont l'absorbtion de la lumière dépend, dans au moins une partie du spectre d'émission de la source lumineuse, de la grandeur à mesurer.

5. Appareil de mesure selon la revendication 1, 2 ou 3, 4, caractérisé par le fait que le générateur de signaux comporte des moyens pour moduler le signal lumineux, lequels moyens sont constitués par des trames (46, 50) mobiles l'une par rapport à l'autre, le mouvement relatif entre les trames dépendant de la grandeur à mesurer, que les trames (46, 50) sont disposées de façon à se chevaucher partiellement, que l'intervalle entre les trames est comblé avec un matériau (47) provoquant une adaptation des indices de réfraction, et qu'il est prévu un dispositif (52, 53) pour presser les trames les unes contre les autres.

6. Appareil de mesure selon la revendication 1, caractérisé par le fait que le générateur comporte des moyens pour moduler le signal lumineux, moyens qui sont constitués par un dispositif électronique (35–38) qui comporte d'une part un détecteur photoélectrique (35) pour transformer le signal optique d'entrée en un signal électrique et qui est influencé par la grandeur à mesurer, et, d'autre part, un dispositif (38) pour transformer le signal électrique en un signal optique.

7. Appareil de mesure selon la revendication 1, caractérisé par le fait qu'une partie du signal optique est dirigé de la source lumineuse (1) directement sur un détecteur photoélectrique (40) dont le signal de sortie est traité, devant un circuit électronique (42), avec la composante de mesure du signal de sortie du générateur de signaux, et que le signal de sortie du circuit électronique (42) est utilisé pour supprimer les parasites qui sont contenus dans les composantes des valeurs de mesure, et qui proviennent de la source lumineuse (1) et du dispositif d'alimentation (10) de celle-ci.

8. Appareil de mesure selon la revendication 5, caractérisé par le fait que les trames (46, 50) sont apposées sur des plaques (45, 48) qui sont faits en un matériau conducteur de la lumière, et qu'il est prévu une fibre (31) pour introduire la lumière dans le générateur de signaux et pour transmettre la lumière qui est renvoyée par le générateur de signaux, ladite fibre étant reliée à une surface de l'une des plaques (45, 48).

9. Appareil de mesure selon la revendication 1, caractérisé par le fait qu'une seule et même fibre (31) est utilisée aussi bien pour transmettre les signaux d'entrée et les signaux de sortie du générateur de signaux, étant noté que la fibre pénètre dans le boîtier (33) du générateur de signaux et qu'elle est, au niveau du point de passage par la paroi du boîtier du générateur de signaux, bloquée de telle façon que l'extrémité (34) de la fibre est capable d'osciller comme une poutre encastrée unilatéralement, et qu'une surface réfléchissante (43) est disposée devant une partie du côté frontal de l'extrémité libre de la fibre.

10. Appareil de mesure selon la revendication 1, caractérisé par le fait que le générateur de signaux comporte des moyens pour moduler le signal lumineux, lesquels moyens sont constitués par des modulateurs optiques à film mince (76, 77).

FIG. 1

FIG. 2

FIG. 2a

FIG. 3

FIG. 4

FIG. 4a

FIG. 5

FIG.6

FIG.7

FIG. 8